(19) Europäisches Patentamt
European Patent Office
Office européen des brevets

(11) **EP 2 410 743 A1**

(12) **EUROPEAN PATENT APPLICATION**

(43) Date of publication:
**25.01.2012 Bulletin 2012/04**

(51) Int Cl.:
*H04N 7/24* (2011.01)

(21) Application number: **10305816.0**

(22) Date of filing: **23.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Alcatel Lucent**
**75007 Paris (FR)**

(72) Inventors:
• **Huysegems, Rafaël**
**2800, Walem (Mechelen) (BE)**
• **Custers, Stefan**
**2260, Westerlo (BE)**

• **de Vlesschauwer, Bart**
**9200, Dendermonde (BE)**
• **van Leeuwijck, Werner**
**2610, Antwerpen (BE)**

(74) Representative: **ALU Antw Patent Attorneys**
**Intellectual Property and Standards**
**Copernicuslaan 50**
**2018 Antwerp (BE)**

Remarks:
Amended claims in accordance with Rule 137(2) EPC.

(54) **Method for transferring video chunks, server entity, client entity and intermediate network entity realizing such a method**

(57) Method to provideg video chunks to a client entity (C) using a request-response protocol. Each video chunk is available at a server entity (S) as a plurality of encoded video chunks encoded according to respective quality levels. The method includes the steps of :
- the server entity sending to the client entity information on the different quality levels,
- the client entity making a selection of one quality level of the different quality levels based on criteria related to local transfer bandwidth related parameters,

- the client entity requesting the server entity to transfer to it encoded chunks encoded in that one chunk quality level and
- the server entity sending the encoded chunks encoded according to that one chunk quality level to said client entity,
- the server entity sending to the client entity additional information related to a transfer time of the encoded chunks from the server entity to the client entity, and
- the client entity in making the selection of the one quality level taking into account also the additional information.

Figure

**Description**

The invention relates to a method for providing video chunks to a client entity using a request-response protocol, each video chunk being available at a server entity as a plurality of encoded video chunks encoded according to respective quality levels said method including the steps of :

- said server entity sending to said client entity information on said different quality levels,
- said client entity making a selection of one quality level of said different quality levels based on criteria related to local transfer bandwidth related parameters,
- said client entity requesting said server entity to transfer to it encoded chunks encoded in said one chunk quality level and
- said server entity sending said encoded chunks encoded according to said one chunk quality level to said client entity,

For efficient delivery of video files over the Internet, real-time protocols such as RTP (Real-time Transport Protocol) and UDP (User Diagram Protocol) have been developed. Due to the availability Content Delivery Networks (CDNs) with HTTP caching nodes for popular web pages, the familiarity of webpage developers with HTTP technology, and the more easy firewall traversal of HTTP/TCP since firewalls are configured to pass websites that are accessed through the web browser, there is a tendency to use non real-time protocols such as HTTP/TCP increasingly for delivery of video files over the Internet. There exist different categories of solutions for delivering video files over the Internet via non real-time protocols such as HTTP/TCP. One of them is adaptive streaming. HTTP adaptive streaming (HAS), known for instance from the "HTTP-Based Adapting Streaming" part of the "IIS Smooth Streaming Technical Overview" by Alex Zambelli (Microsoft Silverlight).

HAS relies on the availability at a server or at an intermediate or caching element of video files in different qualities and segmented time slots, also called chunks, of for instance 2 seconds duration.

Time segments of different qualities can be combined when viewing the video. HTTP adaptive streaming enables the client entity to view the video in the highest quality estimated possible, and to request lower quality segments when the available bandwidth in the network is insufficient, or at start-up of a new video in order to enable quick start through downloading initial segments of lower quality. Typically, the client entity shall try to keep its buffer filled to a certain level, e.g. 20 to 30 seconds playback time. When the buffer depletes, the client starts requesting lower quality segments of the video file in order to fill up the buffer more quickly and avoid freezing of the video.

Since the choice of the quality level influences the required bandwidth to download the corresponding encoded chunks, sudden fluctuations in the available network bandwidth are challenging for the selection of the chunk quality. In case a number of subsequent chunks can be downloaded at a high speed, it can be decided to go to a higher video quality level and as long as chunks can be transferred quickly, it will be decided to further increase the quality level for the viewer. If the bandwidth suddenly drops, the high-quality chunk that is at that moment downloaded must be finished completely at the lower bandwidth. This has a severe impact on the filling level of the buffer at the client entity that stores the chunks before displaying them to a client's user. This can even lead to complete buffer starvation, resulting in a video freeze for the viewer.

Bandwidth fluctuations can have several causes such as:

- Transfer of chunks over a wireless link where the proximity to the nearest base-station antenna together with interference effects can play an important role.
- Chunk caching by intermediate HTTP-proxies can have the same effect on the perceived bandwidth. Chunks that are cached close to the client (including the internal cache of the client) can be retrieved very fast, indicating a high available bandwidth. Chunks that are not cached must be fetched from the server and are retrieved relatively slowly compared to the cached segments. From the perspective of the client the available bandwidth on the link will strongly fluctuate and this will influence the quality level decision taking.
- Transfer of chunks over a shared link. Depending on the load generated by other users, the available bandwidth for one client can drastically change.

At any time, a balance has to be found when selecting a quality level. If the selection is adapted too quickly, this will result in a lot of unnecessary quality variations which can be disturbing for the viewer. If the decision taking is not reactive enough, this will result in a more constant display quality at the risk of invoking a buffer under-run.

Because it is not possible on the client side to make solid predictions in case of strong bandwidth fluctuations, the achieved quality is sub-optimal. On top, there is a risk for buffer starvation.

It is an object of the invention to overcome the above shortcomings of the known method.

The method according to the invention realizes this object in that it includes the additional steps of said server entity sending to said client entity additional information related to a transfer time of said encoded chunks from said server entity to said client entity and said client entity in making said selection of said one quality level taking into account also said additional information.

In this way, instead of following a pure 'trial and error/recovery' style of prediction of the optimal quality level , the additional information received from the server entity enables the client (within some margin of accuracy) to 'calculate' the highest quality level that can be achieved without causing a buffer under-run.

An additional feature of an embodiment of the method according to the invention is that said server entity sends said additional information upon request from said client entity. In this way the client entity determines the timing and frequency of the quality selection.

Another additional feature of an embodiment of the method according to the invention is that said additional information is sent together with said information on said quality levels. In this way the above additional feature is realized whilst in the same time limiting the number of transfers of information.

Still another additional feature of an embodiment of the method according to the invention is that said server entity sends said additional information whenever a predetermined relevant change in said transfer time occurs. In this way, in a system where the additional information is provided upon request from the client entity, this client entity will be made aware of relevant changes in the transfer time occuring between two information requests.

Another additional feature of an embodiment of the method according to the invention is that communication between said server entity and said client entity is performed via an intermediate network element and that said method includes the additional step of said intermediate network element updating said additional information to take into account local information available at said intermediate network element such as, but not limited to possibly cached chunks or transfer time needed to transfer video chunks from said intermediate network element to said client entity or profile information of said client entity or any combination thereof.

Intermediate network elements could influence the transfer time of the chunks. F.i. caches could reduce that estimated transfer time. Also, the bandwidth available to or needed by a client can be dependent on the client's profile f.i. on its subscription agreement or on its viewing behavior respectively. This additional feature makes it possible to inform the client entity thereof.

The invention also relates to a server entity, to a client entity and to an intermediate network entity realizing the method according to the invention.

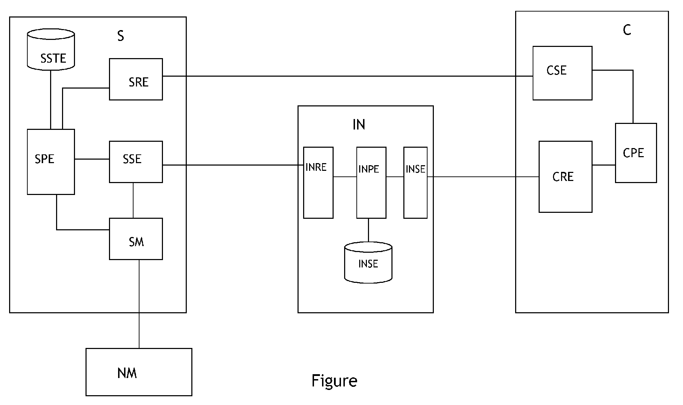

Embodiments of a server entity, of a client entity and of an intermediate network element realizing the present invention are hereafter described, by way of example only, and with reference to the accompanying Figure that represents a network where a server entity S communicates with a client entity C via the Web either directly or via an intermediate network element IN. S also communicates with a Network management module NM.

For the sake of clarity the web connections between S, NM, IN and C are represented by single lines.

S contains a server storage entity SSTE, a server receiving entity SRE, a server sending entity SSE, a server processing entity SPE and a server manager SM.

S uses the Hypertext Transfer Protocol (HTTP) to provide video streams to C either directly or via IN that acts as a caching entity. The video source is cut in chunks of typically 2 to 4 seconds long that are encoded using the desired delivery code format. How this is done is not desribed in detail as it is not the subject of this invention. The coding can be done by S or by an external encoder. The chunks are stored in S by SSTE and are delivered by means of adaptive streaming. To this end the chunks are encoded using different bit rates corresponding to different quality levels.

IN contains a receiving part INRE, a processing part INPE, a sending part INSE and a storage part INSE. It functions as caching element for video chunks to be sent to C to reduce the transmission time of these chunks and to reduce the load on the network.

C contains a receiving part CRE, a sending part CSE and a processing part CPE.

In order to have video chunks sent to it, C, or more specifically CSE in C, in a first instance sends a request to S to get information on the available quality levels this is a so called manifest request. In the shown embodiment this request is sent directly to S, but this can equally well be done via IN.

S receives this request via SRE and transmits it to SPE. SPE is adapted to retrieve the information on the available quality levels from SSTE. SM Is adapted to obtain from a network manager module NM via the network, bandwidth related information on parameters that can influence the time needed to transfer video chunks to C, such as network load and bandwidth reserved for C. This information is forwarded to SPE that is adapted to evaluate this transfer time based on the bandwidth related information, on the size of the available chunks and on local information such as the load of the server. For the calculation following formula is used in the considered implementation, but other formulas can be used as well :

$$(t = BW/s + RTT + Ts)$$

with t = estimated transfer time, BW = bandwidth available from server to client, s = size of the segment, RTT = round trip time (client-server-client), Ts = processing time needed by the server to handle the request. Information on t is then, together with the information on the available quality levels, sent to SSE in the form of a so called manifest message, for transmission to C. This transmission is done via IN. IN receives the message in INRE that transmits it to INPE where the information on the evaluated transfer time in the manifest message is possibly adapted based on what chunks are cached by IN, on the quality levels available in IN and on how this availability near to C can influence the transfer time. In the considered embodiment IN modifies the time to

$$tu = BWI/s + RTTI + TsI \quad \text{if the chunk is available in the cache,}$$

if the chunk is available in the cache,

with tu = updated estimated transfer time, BWI = bandwidth available from IN to client, s = size of the segment, RTTI = round trip time (client-IN-client), TsI = processing time needed by the IN to handle the request. Again in alternative embodiments other formulas could be used as well. The updated manifest message is then forwarded to INSE for transmission to C.

It has to be noted that in the considered embodiment IN is a caching unit. In an alternative embodiment IN can however also be an access node such as a DSLAM node. In this case the evaluated download time is adapted in function of the type of access link (ADSL, VDSL, fiber ...).

C receives the manifest message via CSE that passes it on to CPE. CPE uses the estimated download times and the locally available information on the size of its local buffers (not shown in the figure) that are used to buffer the chunks before displaying them to a user (also not shown) to calculate the highest quality level that can be achieved for the transfer without causing a buffer over/under-run. Information on this calculated quality level is inserted in a chunk request message that is forwarded to CRE for transfer to S via IN, in order to obtain video chunks with the requested quality level. This request is then handled either by IN if the requested chunks are cached or is forwarded to S by IN if they are not available at IN and the requested chunks are sent to C.

C periodically sends out such manifest requests in order to become aware of changes in the evaluated transfer time due to changes in the network or in S, such as fluctuations of the network load, changes in the caching conditions, changes in the load of S.

In addition, SPE in S periodically checks via SM if there are no sudden changes in the network conditions that could have a relevant impact on the evaluated transfer time. If they occur the evaluated transfer time is recalculated and a new manifest message is sent to C. In alternative embodiments this checking is done by SM, or triggers are received from the network whenever changes in the network conditions occur.

How the video chunks are encoded and decoded and how they are streamed to the user is not described herein since this is not the subject of the invention.

Also, the implementation of the functional blocks in S, IN and C is not described in details as this implementation should be quite straightforward for a person skilled in the art based on the above functional descriptions.

In addition it should be noted that the described functions may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Other hardware, conventional and/or custom, may also be included.

The above description and drawing merely illustrate the principles of the invention. It will thus be appreciated that, based on this description, those skilled in the art will be able to devise various arrangements that, although not explicitly described or shown herein, embody the principles of the invention and are included within its spirit and scope. Furthermore, the examples recited herein are principally intended expressly to be only for pedagogical purposes to aid the reader in understanding the principles of the invention and the concepts contributed by the inventor(s) to furthering the art, and are to be construed as being without limitation to such specifically recited example and conditions and all statements herein reciting principles, aspects, and embodiments of the invention, as well as specific example thereof, are intended to encompass equivalents thereof.

**Claims**

1. Method for providing video chunks to a client entity (C) using a request-response protocol, each video chunk being available at a server entity (S) as a plurality of encoded video chunks encoded according to respective quality levels said method including the steps of :

- said server entity sending to said client entity information on said different quality levels,
- said client entity making a selection of one quality level of said different quality levels based on criteria related to local transfer bandwidth related parameters,
- said client entity requesting said server entity to transfer to it encoded chunks encoded in said one chunk quality level and
- said server entity sending said encoded chunks encoded according to said one chunk quality level to said client entity,

**characterized in that** said method includes the aditional steps of:

- said server entity sending to said client entity additional information related to a transfer time of said encoded chunks from said server entity to said client entity
- said client entity in making said selection of said one quality level taking into account also said additional information.

2. Method according to claim 1, **characterized in that** said server entity (S) derives said additional information from at least one of a list of parameters said list including but not being limited to the size of said encoded chunks, the load of said server, the load of a network over which said encoded chunks are transferred, bandwidth reserved on said network for said client entity.

3. Method according to claim 1, **characterized in that** said server entity (S) sends said additional information upon request from said client entity (C).

4. Method according to claim 3, **characterized in that** said additional information is sent together with said information on said quality levels.

5. Method according to claim 1, **characterized in that** said server entity (S) sends said additional information whenever a predetermined relevant change in said transfer time occurs.

6. Method according to claim 1, **characterized in that** communication between said server entity (S) and said client entity (C) is performed via an intermediate network element and that said method includes the additional step of said intermediate network element (IN) updating said additional information to take into account local information available at said intermediate network element (IN) such as, but not limited to possibly cached chunks or transfer time needed to transfer video chunks from said intermediate network element (IN) to said client entity (C) or profile information of said client entity (C) or any combination thereof.

7. Server entity (S) to realize a method according to claim 1, said server entity (S) including a storage entity (SSTE) adapted to store video chunks, each video chunk being stored as a plurality of encoded video chunks each encoded according to respective quality levels, a transmission entity (SSE) adapted to send to a client entity (C) information on said different quality levels, a receiving entity (SRE) adapted to receive from said client entity (C) a request to transfer to it encoded chunks encoded in a selected chunk quality level, said transmission entity (SSE) being additionally adapted to send said encoded chunks encoded in said selected quality level to said client entity (C), **characterized in that** said server entity (S) also includes a processing entity (SPE) adapted to generate additional information related to a transfer time of said encoded chunks from said server entity (S) to said client entity (C), said transmission entity being adapted to transfer said additional information to said client entity (C).

8. Server entity (S) according to claim 7, **characterized in that** said processing entity (SPE) is adapted to generate said additional information from at least one of a list of parameters including but not being limited to the size of said encoded chunks, the load of said server (S), the load of a network over which said encoded chunks are transferred, bandwidth reserved on said network for said client entity (C).

9. Server entity (S) according to claim 7, **characterized in that** said receiving entity (SRE) is adapted to receive from said client entity (C) a request to send said additional information on said different quality levels and said transmission entity (SSE) being adapted to transfer said additional information to said client entity (C) upon receipt of said request.

10. Server entity (S) according to claim 9, **characterized in that** said transmission entity (SSE) is adapted to send said additional information together with said information on said different quality levels.

11. Server entity (S) according to claim 7 **characterized in that** said processing entity (SPE) is adapted to generate said additional information upon detection of a predetermined relevant change in said transfer time and to then trigger said transmission entity to send said additional information.

12. Client entity (C) for realizing a method according to claim 1, said client entity (C) including a receiving entity (CRE) adapted to receive information on possible quality levels of encoded video chunks, a selection entity (CPE) adapted to make a selection of one chunk quality level of said possible quality levels based on criteria related to locally available information on bandwidth needed to transfer said encoded video chunks, a sending entity (CSE) adapted to send to a server entity (S) a request to transfer to it encoded video chunks encoded in said one chunk quality level, said receiving entity (CRE) being adapted to receive said encoded video chunks, **characterized in that** said receiving entity (CRE) is also adapted to receive additional information related to a transfer time of said encoded chunks from said server entity (S) to said client entity (C) and that said selection entity (CPE) is additionally adapted to make said selection of said one quality level taking into account also said additional information.

13. Intermediate network entity (IN) for realizing a method according to claim 6, **characterized in that** said intermediate network entity (IN) includes a receiving module (INRE) adapted to receive information related to a transfer time for sending encoded video chunks from a server entity (S) to a client entity (C), a processing module (INPE) adapted to generate updated additional information, said updated additional information being an update of said additional information to take into account local information such as but not limited to information related to transfer time of video chunks from said intermediate network element (IN) to said client entity (C) or information on cached video chunks or profile information of said client entity (C) or any combination thereof, and a sending module (INSE) to send said updated additional information to said client entity.

**Amended claims in accordance with Rule 137(2) EPC.**

**1.** Method for providing video chunks to a client entity (C) using a request-response protocol, each video chunk being available at a server entity (S) as a plurality of encoded video chunks encoded according to respective quality levels said method including the steps of :

- said server entity sending to said client entity information on said different quality levels,
- said client entity making a selection of one quality level of said different quality levels based on criteria related to local transfer bandwidth related parameters,
- said client entity requesting said server entity to transfer to it encoded chunks encoded in said one chunk quality level and
- said server entity sending said encoded chunks encoded according to said one chunk quality level to said client entity,

**characterized in that** said method includes the aditional steps of :

- said server entity sending to said client entity additional information on an evaluated transfer time of said encoded chunks from said server entity to said client entity
- said client entity in making said selection of said one quality level taking into account also said additional information.

**2.** Method according to claim 1, **characterized in that** said server entity (S) determines said evaluated transfer time from at least one of a list of transfer time related parameters said list including but not being limited to the size of said encoded chunks, the load of said server, the load of a network over which said encoded chunks are transferred, bandwidth reserved on said network for said client entity.

**3.** Method according to claim 1, **characterized in that** said server entity (S) sends said additional information upon request from said client entity (C).

**4.** Method according to claim 3, **characterized in that** said additional information is sent together with said information on said quality levels.

**5.** Method according to claim 1, **characterized in that** said server entity (S) sends said additional information whenever a predetermined relevant change in said evaluated transfer time occurs.

**6.** Method according to claim 1, **characterized in that** communication between said server entity (S) and said client entity (C) is performed via an intermediate network element and that said method includes the additional step of said intermediate network element (IN) updating said additional information to take into account local transfer time related information available at said intermediate network element (IN) such as, but not limited to possibly cached chunks or transfer time needed to transfer video chunks from said intermediate network element (IN) to said client entity (C) or profile information of said client entity (C) or any combination thereof.

**7.** Server entity (S) to realize a method according to claim 1, said server entity (S) including a storage entity (SSTE) adapted to store video chunks, each video chunk being stored as a plurality of encoded video chunks each encoded according to respective quality levels, a transmission entity (SSE) adapted to send to a client entity (C) information on said different quality levels, a receiving entity (SRE) adapted to receive from said client entity (C) a request to transfer to it encoded chunks encoded in a selected chunk quality level, said transmission entity (SSE) being additionally adapted to send said encoded chunks encoded in said selected quality level to said client entity (C), **characterized in that** said server entity (S) also includes a processing entity (SPE) adapted to generate additional information on an evaluated transfer time of said encoded chunks from said server entity (S) to said client entity (C), said transmission entity being adapted to transfer said additional information to said client entity (C).

**8.** Server entity (S) according to claim 7, **characterized in that** said processing entity (SPE) is adapted to generate said additional information from at least one of a list of transfer time related parameters including but not being limited to the size of said encoded chunks, the load of said server (S), the load of a network over which said encoded chunks are transferred, bandwidth reserved on said network for said client entity (C).

**9.** Server entity (S) according to claim 7, **characterized in that** said receiving entity (SRE) is adapted to receive from said client entity (C) a request to send said additional information on said different quality levels and said transmission entity (SSE) being adapted to transfer said additional information to said client entity (C) upon receipt of said request.

**10.** Server entity (S) according to claim 9, **characterized in that** said transmission entity (SSE) is adapted to send said additional information together with said information on said different quality levels.

**11.** Server entity (S) according to claim 7 **characterized in that** said processing entity (SPE) is adapted to generate said additional information upon detection of a predetermined relevant change in said evaluated transfer time and to then trigger said transmission entity to send said additional information.

**12.** Client entity (C) for realizing a method according to claim 1, said client entity (C) including a receiving entity (CRE) adapted to receive information on possible quality levels of encoded video chunks, a selection entity (CPE) adapted to make a selection of one chunk quality level of said possible quality levels based on criteria related to locally available information on bandwidth needed to transfer said encoded video chunks, a sending entity (CSE) adapted to send to a server entity (S) a request to transfer to it encoded video chunks encoded in said one chunk quality level, said receiving entity (CRE) being adapted to receive said encoded video chunks, **characterized in that** said receiving entity (CRE) is also adapted to receive additional information on an evaluated transfer time of said encoded chunks from said server entity (S) to said client entity (C) and that said selection entity (CPE) is additionally adapted to make said selection of said one quality level taking into account also said additional information.

**13.** Intermediate network entity (IN) for realizing a method according to claim 6, **characterized in that** said intermediate network entity (IN) includes a receiving module (INRE) adapted to receive additional information on an evaluated transfer time for sending encoded video chunks from a server entity (S) to a client entity (C), a processing module (INPE) adapted to generate updated additional information, said updated additional information being an update of said additional information to take into account local information such as but not limited to information related to transfer time of video chunks from said intermediate network element (IN) to said client entity (C) or information on cached video chunks or profile information of said client entity (C) or any combination thereof, and a sending module (INSE) to send said updated additional information to said client entity.

Figure

**Europäisches Patentamt**
**European Patent Office**
**Office européen des brevets**

**EUROPEAN SEARCH REPORT**

Application Number

EP 10 30 5816

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | ALEX ZAMBELLI: "IIS Smooth Streaming Technical Overview"[Online] 23 March 2009 (2009-03-23), pages 1-17, XP002617719 Microsoft Retrieved from the Internet: URL:http://www.microsoft.com/downloads/en/ details.aspx?displaylang=en&FamilyID=03d22 583-3ed6-44da-8464-b1b4b5ca7520> [retrieved on 2011-01-24] * page 7, line 6 - page 8, line 1 * * page 13, line 5 - page 14, line 5 * ----- | 1-13 | INV. H04N7/24 |
| X | JARNIKOV D ET AL: "Client intelligence for adaptive streaming solutions" IEEE INTERNATIONAL CONFERENCE ON MULTIMEDIA AND EXPO (ICME), 2010, 19 July 2010 (2010-07-19), pages 1499-1504, XP031761591 IEEE, PISCATAWAY, NJ, USA ISBN: 978-1-4244-7491-2 * abstract * sections 1 and 2. ----- | 1-13 | |
| X | US 2004/064573 A1 (LEANING ANTHONY R [GB] ET AL) 1 April 2004 (2004-04-01) * abstract * * paragraph [0026] * * paragraph [0044] - paragraph [0059] * ----- -/-- | 1-13 | TECHNICAL FIELDS SEARCHED (IPC) H04N |

The present search report has been drawn up for all claims

| Place of search | Date of completion of the search | Examiner |
|---|---|---|
| Berlin | 31 January 2011 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 10 30 5816

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAVY VAN DEURSEN ET AL: "On media delivery protocols in the Web" IEEE INTERNATIONAL CONFERENCE ON MULTIMEDIA AND EXPO (ICME), 2010, 19 July 2010 (2010-07-19), pages 1028-1033, XP031760994 IEEE, PISCATAWAY, NJ, USA ISBN: 978-1-4244-7491-2 * abstract * sections 2.3, 3.1 and 3.2 | 1-13 | |
| X | NIKOLAUS FÄRBER ET AL: "Adaptive progressive download based on the MPEG-4 file format" JOURNAL OF ZHEJIANG UNIVERSITY SCIENCE A; AN INTERNATIONAL APPLIED PHYSICS & ENGINEERING JOURNAL, vol. 7, no. 1, 1 January 2006 (2006-01-01), pages 106-111, XP019385056 SPRINGER, BERLIN, DE ISSN: 1862-1775 DOI: 10.1631/JZUS.2006.AS0106 * abstract * * page 108, right-hand column, line 7 - page 109, right-hand column, line 8 * | 1-13 | |
| A | RESEARCH IN MOTION UK LIMITED: "Use of Metadata for Client Controlled Adaptation of HTTP Streaming" 3GPP DRAFT; 3RD GENERATION PARTNERSHIP PROJECT, no. S4-090648, 12 August 2009 (2009-08-12), XP050356925 MOBILE COMPETENCE CENTRE; SOPHIA-ANTIPOLIS CEDEX; FRANCE sections 1 and 2. | 5,11 | TECHNICAL FIELDS SEARCHED (IPC) |

The present search report has been drawn up for all claims

| Place of search | Date of completion of the search | Examiner |
|---|---|---|
| Berlin | 31 January 2011 | Kontopodis, D |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 30 5816

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2011

| Patent document cited in search report | | Publication date | Patent family member(s) | | Publication date |
|---|---|---|---|---|---|
| US 2004064573 | A1 | 01-04-2004 | AT | 464740 T | 15-04-2010 |
| | | | CN | 1481643 A | 10-03-2004 |
| | | | EP | 2071827 A2 | 17-06-2009 |
| | | | ES | 2342357 T3 | 06-07-2010 |

EPO FORM P0459

For more details about this annex : see Official Journal of the European Patent Office, No. 12/82